# EUROPÄISCHE PATENTSCHRIFT

(11) **EP 2 171 545 B1**
(45) Veröffentlichungstag und Bekanntmachung des Hinweises auf die Patenterteilung: **05.12.2018**
(21) Anmeldenummer: 08773844.9
(22) Anmeldetag: 25.06.2008
(51) Int. Cl.: G03B 15/06

(54) **DIFFUSOR ZUM LÖSBAREN BEFESTIGEN AN EINEM REFLEKTORSCHIRM ODER DERGLEICHEN**
DIFFUSER TO BE DETACHABLY MOUNTED ON A REFLECTOR SCREEN OR THE LIKE
DIFFUSEUR PERMETTANT UNE FIXATION AMOVIBLE SUR UN ÉCRAN RÉFLECTEUR OU ANALOGUE

(30) Priorität: 28.06.2007 DE 202007009232 U
(43) Veröffentlichungstag der Anmeldung: 07.04.2010
(73) Patentinhaber: Briese, Hans-Werner Friedrich, 22303 Hamburg (DE)
(72) Erfinder: Briese, Hans-Werner Friedrich, 22303 Hamburg (DE)
(74) Vertreter: Stork Bamberger Patentanwälte PartmbB
(86) Internationale Anmeldenummer: PCT/EP2008/005436
(87) Internationale Veröffentlichungsnummer: WO 2009/000556

(56) Entgegenhaltungen:
- WO-A-02/19024
- CA-A1- 1 257 997
- JP-A- H09 213 119
- US-A- 4 052 607
- US-A- 4 504 888
- US-A- 4 594 645
- US-B1- 6 709 121

## Beschreibung

Die Erfindung betrifft einen Diffusor zum lösbaren Befestigen an einem Reflektorschirm, umfassend ein Diffusorelement sowie Befestigungsmittel zum Befestigen des Diffusorelementes am Reflektorschirm oder dergleichen, wobei das Befestigungsmittel mehrere zur Aufnahme korrespondierender Schirmspeichen des Reflektorschirms ausgebildete und eingerichtete Befestigungselemente aufweist.

Derartige Diffusoren kommen insbesondere im Bereich der Fotographie oder des Films vorzugsweise in Verbindung mit einem Reflektorschirm oder dergleichen zum Einsatz. Mittels der Reflektorschirme werden vorzugsweise unterschiedlichen Licht- und/oder Schatteneffekte und -bilder erzeugt bzw. gestaltet. Die Diffusoren, die im Bereich einer Lichtaustrittsöffnung des Reflektorschirms angeordnet sind, dienen insbesondere zum Streuen des Lichts. Durch einen Diffusor bewirkt man beispielsweise, dass die Übergänge zwischen Licht und Schatten verändert werden. Insbesondere wird der Übergang von Licht zu Schatten und umgekehrt fließender. Man spricht in diesem Zusammenhang auch von so genanntem weichem Licht. Des Weiteren können mit Diffusoren auch störenden Reflexe, wie sie beispielsweise auf glatten Flächen auftreten, reduziert werden.

Die Diffusoren sind lösbar an den Reflektorschirmen befestigt. Zur Veränderung der Diffusorwirkung können die Diffusoren ausgetauscht werden. Auch zum Zusammenfalten der Reflektorschirme sind die Diffusoren abnehmbar. Es sind Diffusoren bekannt, die als Befestigungsmittel Klettverschlüsse, Knöpfe oder dergleichen aufweisen. Konkret werden die Diffusorelemente über die Lichtaustrittsöffnung des Reflektorschirms gelegt und mittels der Befestigungsmittel eng anliegend mit diesem verbunden. Die bisherigen Diffusoren weisen jedoch den Nachteil auf, dass sie zum einen die Lichtaustrittsöffnung quasi abschließen, was bei angeschaltetem Leuchtmittel innerhalb des Reflektorschirms zu einem Hitzestau führt. Zum anderen werfen die bekannten Diffusoren aufgrund fehlender Spannung Falten, was zu einer ungleichmäßigen bzw. unregelmäßigen Beleuchtung führt.

Ein solcher Diffusor mit den Merkmalen des Oberbegriffes des Anspruches 1 ist aus der US 6,709,121 B1 bekannt. Als Befestigungsmittel sind am Diffusorelement Taschen zur Aufnahme der Schirmspeichen ausgebildet. Diese Ausbildung ist aber nicht geeignet, das Diffusorelement ausreichend zu spannen. Des Weiteren ist die Anbringung und Abnahme des Diffusorelementes an den bzw. vom Reflektorschirm erschwert.

US 4,594,645 offenbart einen Diffusor, welcher als Befestigungsmittel zum Befestigen des Diffusors an einem Reflektorschirm Öffnungen und Klettverschlüsse aufweist. US 4,052,607 offenbart einen Diffusor, welcher als Befestigungsmittel zum Befestigen des Diffusors an einem Reflektorschirm ein rechteckförmiges Plättchen aufweist.

Es ist daher Aufgabe der vorliegenden Erfindung, einen einfach handhabbaren Diffusor zu schaffen, der die genannten Nachteile vermeidet.

Diese Aufgabe wird durch einen Diffusor der eingangs genannten Art dadurch gelöst, dass die Befestigungselemente als eine Federwirkung aufbringende, einteilige Elemente ausgebildet sind, wobei die Befestigungselemente flache Plättchen sind und eine Öffnung zur Aufnahme jeweils einer Schirmspeiche aufweisen, wobei die Öffnung in Bezug auf den Mittelpunkt M des Befestigungselementes außermittig angeordnet ist. Üblicherweise stehen diese Schirmspeichen nämlich über die Lichtaustrittsöffnung des Reflektorschirms über. Dadurch ist es möglich, das Diffusorelement mit einem Abstand vor der Lichtaustrittsöffnung des Reflektorschirms zu positionieren, so dass die durch das oder jedes Leuchtmittel erzeugte Hitze zirkulieren kann. Die Betriebsdauer und die Standzeiten insbesondere der Reflektorschirme bzw. der zugehörigen Leuchtmittel können damit deutlich verbessert werden. Durch die erfindungsgemäße Ausbildung ist auf einfache Weise eine gleichmäßige Spannung auf das Diffusorelement aufbringbar. Weiterhin ist der Diffusor in der Handhabung, also insbesondere beim Anbringen an den Reflektorschirm und beim Abnehmen, besonders einfach gestaltet. Durch die außermittige Anordnung der Öffnung ist ein die Federwirkung unterstützender Hebelarm definiert, derart, dass das Diffusorelement quasi freitragend ohne direkte Berührung mit dem Reflektorschirm gespannt ist.

Vorzugsweise sind mehrere plattenartige Befestigungselemente gleichmäßig über den Umfang des Diffusorelementes verteilt und an diesem befestigt. Damit wird auf effektive Weise eine gleichmäßige Befestigung bzw. "Aufhängung" an den Schirmspeichen gewährleistet, was zu einer faltenfreien Spannung des Diffusorelementes führt.

Eine zweckmäßige Weiterbildung sieht vor, dass jedes Befestigungselement als Spannelement ausgebildet ist. Dies unterstützt die faltenfreie und sichere Anbringung des Diffusors am Reflektorschirm.

Weitere zweckmäßige und/oder vorteilhafte Merkmale und Ausgestaltungen ergeben sich aus den Unteransprüchen und der Beschreibung. Eine besonders bevorzugte Ausführungsform wird anhand der beigefügten Zeichnung näher erläutert. In der Zeichnung zeigt:
- Fig. 1: eine Seitenansicht eines Reflektorschirms mit einem vorgespannten Diffusor,
- Fig. 2: eine Draufsicht auf ein einzelnes Befestigungselement,
- Fig. 3: eine Außenansicht eines auf eine Schirmspeiche gefädelten Befestigungselementes,
- Fig. 4: eine Seitenansicht der in Figur 3 dargestellten Anordnung,
- Fig. 5: eine Innenansicht des auf die Schirmspeiche gefädelten Befestigungselementes, und
- Fig. 6: eine starke Vergrößerung einer Verbindung zwischen dem Diffusorelement und einem Befestigungselement in einem nicht am Reflektorschirm montiertem Zustand.

Der im Folgenden beschriebene Diffusor ist insbesondere zum Anbringen an einen Reflektorschirm geeignet. Selbstverständlich kann der Diffusor auch anderweitig, z.B. bei Blitzgeräten etc. eingesetzt werden.

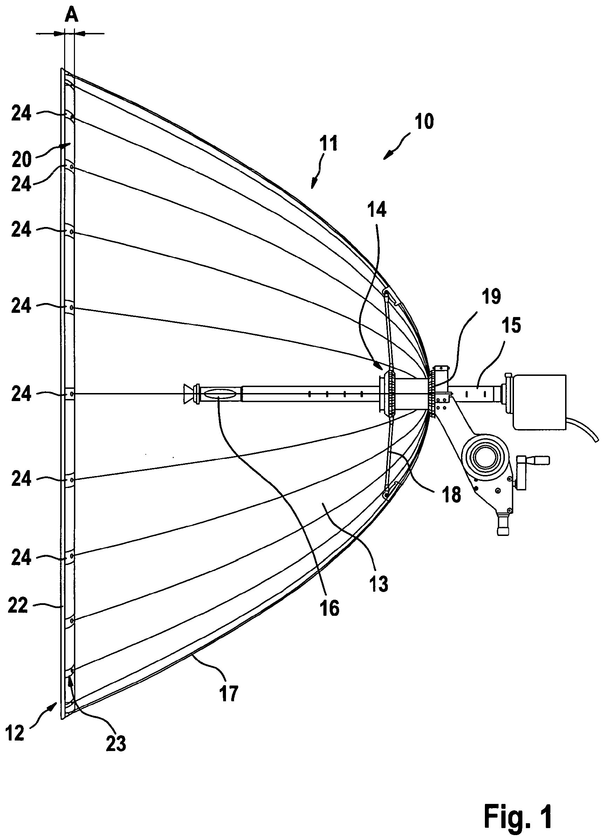

Zum besseren Verständnis der Erfindung wird in Bezug auf die Figur 1 zunächst eine Anordnung 10, bestehend aus einem Reflektorschirm 11 und einem Diffusor 12 beschrieben. Der Aufbau des Reflektorschirms 11 kann unterschiedlich ausgebildet sein. Rein beispielhaft weist der Reflektorschirm 11, der aufspannbar oder starr ausgebildet sein kann, ein Reflexionselement 13, eine Stütz- und Spannstruktur 14 sowie ein Trägerelement 15 mit mindestens einem Leuchtmittel 16 auf. Die Stütz- und Spannstruktur 14 umfasst Schirmspeichen 17 und Spreizspeichen 18 auf. Die Schirmspeichen 17 sind in außen liegenden Säumen des Reflexionselementes 13 eingeschoben und erstrecken sich von einem Lagerkörper 19 bis in den Bereich einer Lichtaustrittsöffnung 20 des Reflektorschirms 11. Die Schirmspeichen 17, die sich gleichmäßig über den Umfang der Lichtaustrittsöffnung 20 verteilen, ragen über die Lichtaustrittsöffnung 20 hinaus. Optional können die Schirmspeichen 17 am freien Ende mit einer z.B. kugelförmigen Abschlusskappe 21 oder dergleichen versehen sein. In anderen nicht gezeigten Ausführungsformen kann die Konstruktion des Reflektorschirms 11 vollständig anders gewählt sein. Entscheidend ist, dass im Bereich der Lichtaustrittsöffnung 20 ein Befestigungsmittel, das in der gezeigten Ausführung durch die überstehenden Schirmspeichen 17 mit den kugelförmigen Abschlusskappen 21 gebildet wird, über die Lichtaustrittsöffnung 20 hinausragt.

Der Diffusor 12 zum lösbaren Befestigen an dem Reflektorschirm 11 umfasst ein Diffusorelement 22 sowie Befestigungsmittel 23 zum Befestigen des Diffusorelementes 22 am Reflektorschirm 11. Das Befestigungsmittel 23 weist mehrere Befestigungselemente 24 auf, die zu dem Befestigungsmittel des Reflektorschirms 11 korrespondieren. Insbesondere sind die Befestigungselemente 24 zur Aufnahme jeweils einer Schirmspeiche 17 des Reflektorschirms 11 ausgebildet und eingerichtet. Die plattenartigen Befestigungselemente 24 sind gleichmäßig über den Umfang des Diffusorelementes 22 verteilt und an diesem befestigt. Zur Befestigung kommen verschiedene gängige Möglichkeiten in Betracht. Besonders bevorzugt sind die Befestigungselemente 24 mit dem Diffusorelement 22, das z.B. aus Folien, Glasfasern, Textilfasern oder Kombinationen daraus und anderen Materialien bestehen kann, vernäht.

Die Anzahl der Befestigungselemente 24 kann variieren, entspricht aber vorzugsweise der Anzahl der korrespondierenden Schirmspeichen 17 des zugeordneten Reflektorschirms 11. Jedes Befestigungselement 24 ist als Spannelement ausgebildet. Dies kann zum einen durch separate Spannmechanismen erreicht werden. Bevorzugt sind die Befestigungselemente 24 aber "in sich", beispielsweise durch geeignete Materialauswahl spannbar. Anders ausgedrückt ist jedes Befestigungselement 24 als ein eine Federwirkung aufbringendes, einteiliges Element ausgebildet. Hierzu sind die Befestigungselemente 24 bevorzugt aus einem flexiblen Material hergestellt. Als besonders geeignet hat sich Polycarbonat herausgestellt. Selbstverständlich sind aber auch andere Materialien oder Materialkombinationen, insbesondere auch dünne Federbleche oder dergleichen möglich.

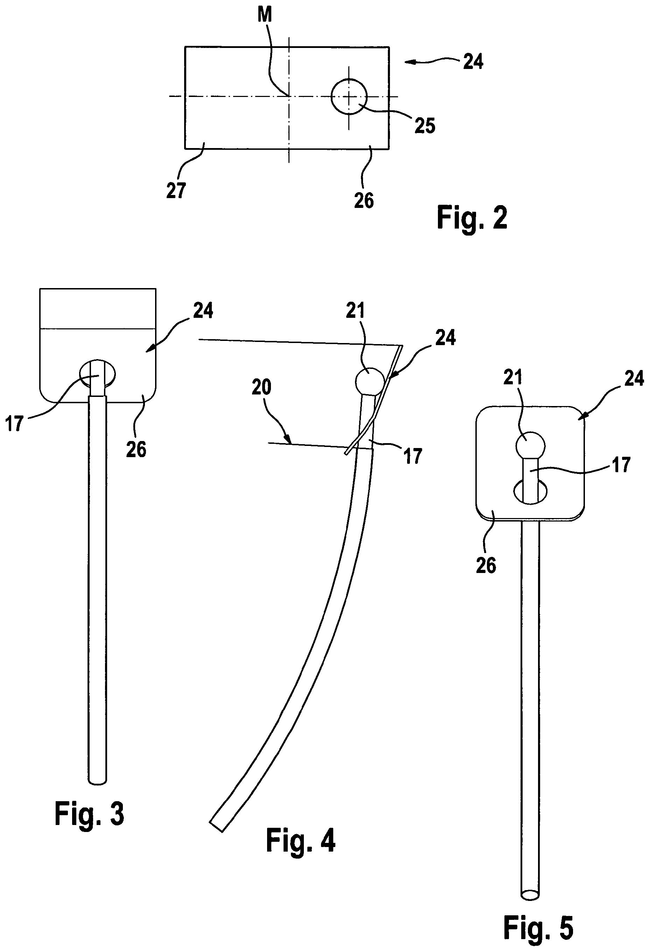

Ein einzelnes Befestigungselement 24 ist der Figur 2 zu entnehmen. Die vorzugsweise rechtreckförmigen und flachen Plättchen, die auch nahezu beliebige andere Formen aufweisen können, weisen eine Öffnung 25 auf, die zur Aufnahme jeweils einer Schirmspeiche 17 ausgebildet ist. Die Öffnung 25 ist derart ausgebildet, dass das Befestigungselement 24 auf die Schirmspeiche 17 aufsteckbar ist. Die Position der Öffnung 25 kann variieren, liegt jedoch bevorzugt nicht im Mittelpunkt M des Befestigungselementes 24. In der Figur 2 ist zu erkennen, dass die Öffnung 25 asymmetrisch angeordnet ist. Das bedeutet, dass die Öffnung 25 in Bezug auf den Mittelpunkt M des Befestigungselementes 24 außermittig angeordnet ist. Damit wird das Befestigungselement 24 quasi in einen die Öffnung 25 aufweisenden Aufnahmeabschnitt 26 und einen mit dem Diffusorelement 22 vernähten Haltabschnitt 27 eingeteilt. Der Durchmesser der die Öffnung 25 bildenden Bohrung ist vorzugsweise geringfügig größer als der größte Querschnitt der Schirmspeiche 17 bzw. der Abschlusskappe 21. Damit wird einerseits ein leichtes Aufstecken gewährleistet und andererseits ein unerwünschtes Abrutschen verhindert. Das Befestigungselement 24 kann auch als Hülse mit einer Aufnahme für eine Schirmspeiche oder anderweitig ausgebildet sein.

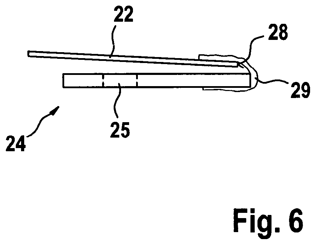

In am Diffusorelement 22 befestigtem und nicht am Reflektorschirm 11 montiertem Zustand erstrecken sich die Plättchen in Ihrer Längserstreckung ausgehend vom äußeren Rand 28 des Diffusorelementes 22 nach innen derart, dass die durch das Plättchen definierte Ebene im Wesentlichen parallel oder leicht geneigt zur durch das ausgebreitete Diffusorelement 22 definierten Ebene verläuft (siehe insbesondere Figur 6). Dabei kann der Übergang zwischen dem Diffusorelement 22 und dem Befestigungselement 24 durch das Diffusorelement 22 selbst oder, wie in Figur 6 gezeigt, durch ein zusätzliches Verbindungsmittel 29 hergestellt sein. In am Reflektorschirm 11 montiertem Zustand des Diffusorelementes 22, der ausschnittsweise insbesondere der Figur 4 zu entnehmen ist, verspannen sich die Befestigungselemente 24 gegenüber den Schirmspeichen 17, die mindestens mit ihren Abschlusskappen 21 durch die Öffnung 25 hindurch ragen. Mit dem kurzen, die Öffnung 25 aufweisenden Schenkel des Befestigungselementes 24 stützt sich dieses an der jeweils korrespondierenden Schirmspeiche 17 ab. Der lange Schenkel, dessen Länge variieren kann, ragt über die Lichtaustrittsöffnung 20 hinaus und hält den Abstand A. Dadurch, dass mehrere Befestigungselemente 24 über den Umfang verteilt sind und vorzugsweise auch einander gegenüberliegen, ist quasi ein Selbsthalteeffekt geschaffen, der den Diffusor 12 faltenfrei und mit einem Abstand A versehen vor der Lichtaustrittsöffnung 20 hält.

## Patentansprüche

1. Diffusor (12) zum lösbaren Befestigen an einem Reflektorschirm (11), umfassend ein Diffusorelement (22) sowie Befestigungsmittel (23) zum Befestigen des Diffusorelementes (22) am Reflektorschirm (11), wobei das Befestigungsmittel (23) mehrere zur Aufnahme korrespondierender Schirmspeichen (17) des Reflektorschirms (11) ausgebildete und eingerichtete Befestigungselemente (24) aufweist, **dadurch gekennzeichnet, dass** die Befestigungselemente (24) als eine Federwirkung aufbringende, einteilige Elemente ausgebildet sind, wobei die Befestigungselemente (24) flache Plättchen sind und eine Öffnung (25) zur Aufnahme jeweils einer Schirmspeiche (17) aufweisen, wobei die Öffnung (25) in Bezug auf den Mittelpunkt (M) des Befestigungselementes (24) außermittig angeordnet ist.

2. Diffusor nach Anspruch 1, **dadurch gekennzeichnet, dass** die flachen Plättchen rechteckförmig ausgebildet sind.

3. Diffusor nach Anspruch 1, **dadurch gekennzeichnet, dass** mehrere plattenartige Befestigungselemente (24) gleichmäßig über den Umfang des Diffusorelementes (22) verteilt und an diesem befestigt sind.

4. Diffusor nach Anspruch 1 bis 3, **dadurch gekennzeichnet, dass** die Anzahl der Befestigungselemente (24) der Anzahl der korrespondierenden Schirmspeichen (17) entspricht.

5. Diffusor nach einem der Ansprüche 1 bis 4, **dadurch gekennzeichnet, dass** jedes Befestigungselement (24) als Spannelement ausgebildet ist.

6. Diffusor nach einem der Ansprüche 1 bis 5, **dadurch gekennzeichnet, dass** jedes Befestigungselement (24) aus Polycarbonat hergestellt ist.

7. Diffusor nach einem der Ansprüche 1 bis 6, **dadurch gekennzeichnet, dass** die Befestigungselemente (24) fest mit dem Diffusorelement (22) vernäht sind.

8. Diffusor nach Anspruch 1, **dadurch gekennzeichnet, dass** die Öffnung (25) asymmetrisch angeordnet ist.

9. Diffusor nach Anspruch 1, **dadurch gekennzeichnet, dass** die Plättchen einen die Öffnung (25) aufweisenden Aufnahmeabschnitt (26) und einen mit dem Diffusorelement (22) verbundenen Halteabschnitt (27) aufweisen.

10. Diffusor nach Anspruch 1, **dadurch gekennzeichnet, dass** die Plättchen in ihrer Längserstreckung ausgehend vom äußeren Rand (28) des Diffusorelementes (22) nach innen gerichtet sind, wobei der Aufnahmeabschnitt (26) nach innen zum Mittelpunkt des Diffusorelementes (22) weist.

11. Diffusor nach Anspruch 1, **dadurch gekennzeichnet, dass** der Durchmesser der die Öffnung (25) bildenden Bohrung größer ist als der Querschnitt der aufzunehmenden Schirmspeichen (17).

## Claims

1. Diffuser (12) for releasable fastening to a reflector screen (11), comprising a diffuser element (22) and fastening means (23) for fastening the diffuser element (22) to the reflector screen (11), wherein the fastening means (23) has a plurality of fastening elements (24) designed and configured to receive corresponding screen spokes (17) of the reflector screen (11), **characterised in that** the fastening elements (24) are designed as one-piece elements applying a spring action, wherein the fastening elements (24) are flat plates and have an opening (25) for receiving one screen spoke (17) each, wherein the opening (25) is arranged eccentrically with respect to the centre point (M) of the fastening element (24).

2. Diffuser according to claim 1, **characterised in that** the flat plates are rectangular.

3. Diffuser according to claim 1, **characterised in that** a plurality of plate-like fastening elements (24) are distributed evenly around the circumference of the diffuser element (22) and are fastened thereto.

4. Diffuser according to claim 1 to 3, **characterised in that** the number of fastening elements (24) equates to the number of corresponding screen spokes (17).

5. Diffuser according to any one of claims 1 to 4, **characterised in that** each fastening element (24) is designed as a tensioning element.

6. Diffuser according to any one of claims 1 to 5, **characterised in that** each fastening element (24) is made of polycarbonate.

7. Diffuser according to any one of claims 1 to 6, **characterised in that** the fastening elements (24) are firmly stitched to the diffuser element (22).

8. Diffuser according to claim 1, **characterised in that** the opening (25) is arranged asymmetrically.

9. Diffuser according to claim 1, **characterised in that** the plates have a receiving section (26) comprising the opening (25) and a holding section (27) connected to the diffuser element (22).

10. Diffuser according to claim 1, **characterised in that** the plates are directed inwards in their longitudinal extension, starting from the outer edge (28) of the diffuser element (22), wherein the receiving section (26) points inwards to the centre point of the diffuser element (22).

11. Diffuser according to claim 1, **characterised in that** the diameter of the bore forming the opening (25) is greater than the cross-section of the screen spokes (17) to be received.

## Revendications

1. Diffuseur (12) destiné à être fixé de manière amovible sur un écran réflecteur (11), comprenant un élément diffuseur (22) ainsi que des moyens de fixation (23) destinés à fixer l'élément diffuseur (22) sur l'écran réflecteur (11), le moyen de fixation (23) présentant plusieurs éléments de fixation (24) conçus et formés pour accueillir des branches d'écran (17) correspondantes de l'écran réflecteur (11), **caractérisé en ce que** les éléments de fixation (24) sont conçus sous forme d'éléments mono-pièce appliquant un effet ressort, lesdits éléments de fixation (24) étant des plaquettes plates et présentant une ouverture (25) pour accueillir respectivement une branche d'écran (17), ladite ouverture (25) étant agencée excentrée par rapport au milieu (M) de l'élément de fixation (24).

2. Diffuseur selon la revendication 1, **caractérisé en ce que** les plaquettes plates sont conçues sous forme rectangulaire.

3. Diffuseur selon la revendication 1, **caractérisé en ce que** plusieurs éléments de fixation (24) de type plaque sont répartis uniformément sur la circonférence de l'élément diffuseur (22) et y sont fixés.

4. Diffuseur selon la revendication 1 à 3, **caractérisé en ce que** le nombre des éléments de fixation (24) correspond au nombre des branches d'écran (17) correspondantes.

5. Diffuseur selon l'une quelconque des revendications 1 à 4, **caractérisé en ce que** chaque élément de fixation (24) est conçu en tant qu'élément tendeur.

6. Diffuseur selon l'une quelconque des revendications 1 à 5, **caractérisé en ce que** chaque élément de fixation (24) est fabriqué en polycarbonate.

7. Diffuseur selon l'une quelconque des revendications 1 à 6, **caractérisé en ce que** les éléments de fixation (24) sont cousus de manière fixe avec l'élément diffuseur (22).

8. Diffuseur selon la revendication 1, **caractérisé en ce que** l'ouverture (25) est agencée de manière asymétrique.

9. Diffuseur selon la revendication 1, **caractérisé en ce que** les plaquettes présentent une partie de logement (26) présentant l'ouverture (25) et une partie de maintien (27) reliée à l'élément diffuseur (22).

10. Diffuseur selon la revendication 1, **caractérisé en ce que** les plaquettes sont orientées vers l'intérieur dans leur étirement longitudinal partant du bord extérieur (28) de l'élément diffuseur (22), la partie de logement (26) étant dirigée vers l'intérieur en direction du milieu de l'élément diffuseur (22).

11. Diffuseur selon la revendication 1, **caractérisé en ce que** le diamètre du trou formant l'ouverture (25) est supérieur à la section des branches d'écran (17) à accueillir.
